# DEMANDE DE BREVET EUROPEEN

(11) **EP 2 000 515 A1**
(43) Date de publication de la demande: **10.12.2008**
(21) Numéro de dépôt: 08300195.8
(22) Date de dépôt: 29.04.2008
(51) Int. Cl.: C09J 4/00, C09K 19/00

(54) **Mélange destiné à la fabrication de gels organiques adhésifs et son utilisation**

(30) Priorité: 06.06.2007 FR 0755513
(71) Demandeur: COMMISSARIAT A L'ENERGIE ATOMIQUE, 75015 Paris (FR)
(72) Inventeur: Serbutoviez, Christophe, 38500, Voiron (FR)
(74) Mandataire: Vuillermoz, Bruno

(57) **Abrégé**

Le mélange selon l'invention comprend :
■ des molécules dotées de propriétés physico-chimiques ;
■ des monomères porteurs de fonctions réticulables et représentant au moins 30% en masse du mélange, avantageusement au moins 40% en masse.

Ce mélange est notamment utilisé dans des procédés de fabrication et de scellement de cellules à cristaux ou de batteries, constituées de cuvettes juxtaposées.

## Description

### DOMAINE DE L'INVENTION

La présente invention concerne la formulation d'un mélange à partir de molécules dotées de propriétés physico-chimiques, notamment optiques ou électrolytes, pour obtenir un gel présentant un pouvoir adhésif.

Plus précisément, la présente invention décrit ce mélange et un procédé permettant d'obtenir un tel gel.

Cette formulation trouve notamment des applications pour le remplissage et le scellement de cellules à cristaux liquides ou de batteries, qui présentent la particularité d'être constituées par une juxtaposition de cuvettes.

### ETAT ANTERIEUR DE LA TECHNIQUE

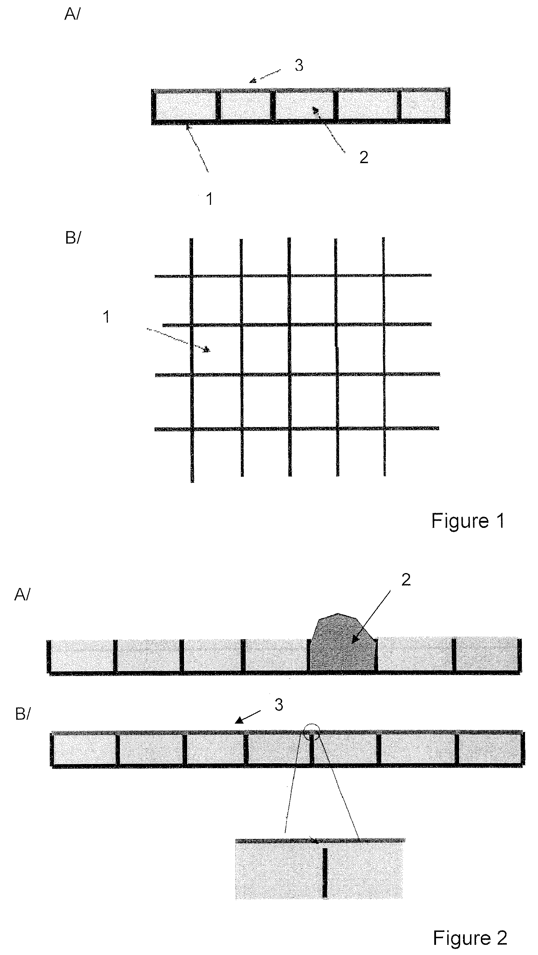

Actuellement il n'existe pas de procédé simple de remplissage et de scellement de structures constituées par des juxtapositions de cuvettes (Figure 1). En effet, lors du remplissage d'une cuvette **1**, il arrive que le liquide, par exemple un liquide à propriétés optiques **2**, déborde de celle-ci (Figure 2A). Il en résulte que les hauts des parois de séparation des cuvettes sont pollués par ce liquide. Il est alors impossible de coller correctement le couvercle **3** de scellement des cuvettes. On constate sur la Figure 2B qu'il n'y a pas d'adhésion du couvercle sur la paroi.

Il existe donc un besoin évident de développer des solutions techniques permettant de remplir et de sceller, de manière aisée et efficace, des structures constituées de cellules juxtaposées fermées au moyen d'un couvercle, telles que des cellules à cristaux ou des batteries.

### DESCRIPTION DE L'INVENTION

De manière surprenante, le Demandeur a mis en évidence une formulation permettant de conserver les propriétés physico-chimiques d'une molécule d'intérêt et présentant, en outre, un pouvoir adhésif. Cette formulation correspond à un gel polymérique adhésif, gorgé de molécules d'intérêt.

Selon un premier aspect, l'invention concerne le mélange permettant d'obtenir, après polymérisation, un tel gel.

Un mélange selon l'invention comprend :
■ des molécules dotées de propriétés physico-chimiques ;
■ des monomères porteurs de fonctions réticulables et représentant au moins 30% en masse du mélange, avantageusement au moins 40% en masse.

La formation du gel se fait par polymérisation, et ce grâce à la présence des monomères porteurs de fonctions réticulables. Les fonctions réticulables privilégiées selon l'invention sont apportées par des groupements acrylique ou époxy. Les monomères peuvent porter une ou plusieurs fonctions réticulables. Selon l'invention, les monomères sont avantageusement bi- ou multi-fonctionnalisés.

De manière remarquable, la concentration massique contrôlée en monomères porteurs de fonctions réticulables dans le mélange est importante pour obtenir le caractère adhésif du gel, après polymérisation. Ainsi, il a été déterminé dans le cadre de l'invention qu'une proportion en monomères porteurs des fonctions réticulables d'au moins 30% en masse, voire d'au moins 40% du mélange total était appropriée.

La polymérisation peut être favorisée par la présence dans le mélange selon l'invention d'au moins un photo-initiateur. Dans ce cas de figure, la polymérisation a lieu sous rayonnement UV.

La nature privilégiée du photo-initiateur dépend de la nature de la fonction réticulable. En présence de groupements acrylique, on utilisera préférentiellement de l'Irgacure 651 ou de la lucridine TPO. En revanche pour des fonctions époxy, un composé de type « photo acide generator » sera avantageusement intégré au mélange. Les concentrations en photo-initiateur dans le mélange sont aisément déterminées par l'homme du métier, et sont généralement inférieures à 1%.

Selon un premier mode de réalisation, les molécules dotées de propriétés physico-chimiques sont des cristaux liquides dotés de propriétés optiques.

Il est à noter que l'utilisation de polymères pour réaliser des fonctions optiques avait déjà été rapportée dans le brevet US 2004/0008319A1. Cependant, ce document ne décrivait pas un gel de polymères du type cristaux liquides. En effet, les matériaux obtenus consistaient en des juxtapositions de gouttes de polymères.

Selon ce mode de réalisation et de manière privilégiée, les monomères porteurs de fonctions réticulables sont également des cristaux liquides. Toutefois, ils ne sont pas nécessairement tous de nature identique.

De tels monomères sont par exemple choisis dans la liste suivante:
- molécule monofonctionnalisée cristal liquide du type acrylique, par exemple le composé A suivant : 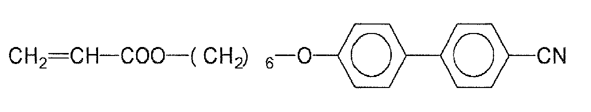
- molécule bifonctionnalisée cristal liquide du type acrylique, notamment le composé B suivant : 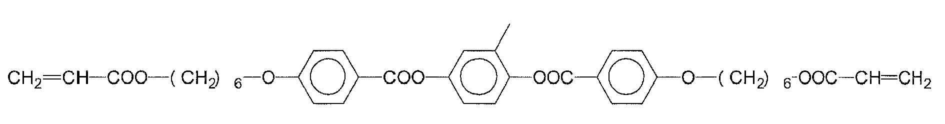
- molécule multifonctionnalisée (en l'occurrence hexafonctionnalisée) cristal liquide du type acrylique, notamment le composé C suivant : 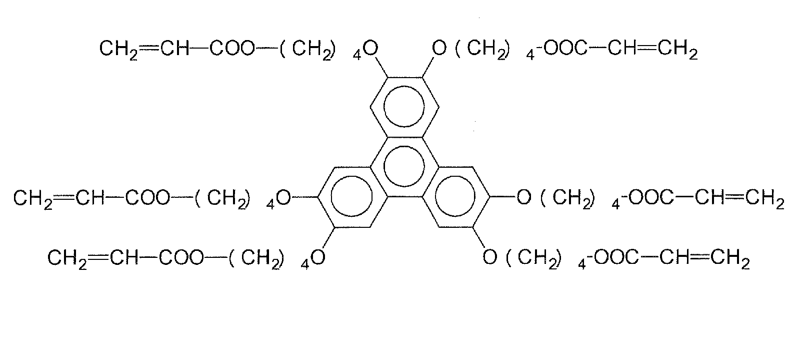
- molécule bifonctionnalisée cristal liquide à base d'époxy, notamment le composé D suivant :

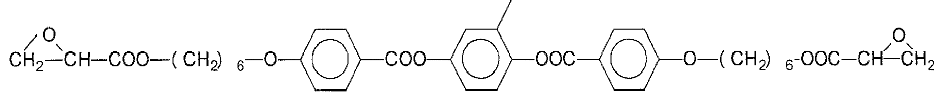

Dans cette application, les monomères cristaux liquides mis en oeuvre sont avantageusement porteurs de groupements acryliques. Les groupements acryliques sont en outre avantageusement au nombre de deux par monomère, c'est-à-dire que celui-ci est avantageusement bifonctionnalisé. De surcroît, les deux fonctions réticulables sont encore plus avantageusement situées aux extrémités de la molécule cristal liquide.

Préférentiellement, le cristal liquide mis en oeuvre dans le mélange, aussi bien celui doté des propriétés optiques que celui fonctionnalisé, est choisi dans le groupe comprenant les cristaux liquides nématiques, cholestériques, smectiques et ferroélectriques.

A l'issue de l'étape de polymérisation, avantageusement réalisée par insolation en lumière UV, le mélange réactionnel se transforme en un gel anisotrope. Il s'agit d'un gel cristal liquide ayant un pouvoir adhésif. La présence des monomères fonctionnalisés, avantageusement multifonctionnalisés, permet de réticuler les chaînes de polymères entre elles et ainsi d'assurer la cohésion au gel. Le gel se présente sous la forme d'un réseau en trois dimensions de polymère réticulé, gorgé de cristal liquide.

Il est à noter que des gels anisotropes ont déjà été décrits dans la littérature pour leurs propriétés optiques de modulation de la lumière (R.A.M. HIKMET *et al*.). Toutefois, les concentrations typiques en monomères rapportées sont de l'ordre de 3 à 20% en masse total du mélange (R.A.M. HIKMET *et al.* ; Yun-Hsing FAN *et al.* ).

La présente invention met en évidence qu'à des concentrations en monomères supérieures à 30 % de la masse totale des constituants (dans ce mode de réalisation, essentiellement les molécules de cristal liquide non réactives), le gel présente des qualités adhésives marquées sur des substrats tels que le verre et les plastiques, sans que les qualités optiques du gel ne soient altérées.

De manière adaptée, le mélange cristal liquide selon l'invention présente, avant polymérisation, une phase cristal liquide.

Le gel obtenu après polymérisation, disposé dans les cuvettes, peut être soumis à l'action d'un champ électrique. Sous cette action, les matériaux contenus dans les cuvettes peuvent s'orienter dans des directions particulières. Cela permet de moduler l'intensité et /ou la polarisation de la lumière incidente.

Il est aussi possible d'intégrer, dans le mélange selon l'invention, des colorants dichroïques ou des composés photochromes. La présence du gel cristal liquide permet leur alignement selon un axe préférentiel. Dans le cas des composés photochromes, la présence du gel autorise en outre une commutation rapide de ces molécules entre l'état transparent et l'état absorbant.

En rapport avec cet aspect, l'invention concerne également un procédé de fabrication et de scellement de cellules à cristaux constituées de cellules juxtaposées.

Un tel procédé comprend les étapes suivantes :
■ remplissage, avantageusement en excès, des cuvettes à l'aide d'un mélange tel que décrit au-dessus;
■ dépose d'un couvercle ;
■ pressage ;
■ polymérisation du mélange, avantageusement par insolation aux UV.

Comme déjà dit, un tel procédé peut comprendre une étape ultérieure d'exposition à un champ électrique, entraînant l'orientation des cristaux dans des directions particulières. Ceci permet de moduler l'intensité et /ou la polarisation de la lumière incidente. Les conditions de cette exposition sont connues de l'homme du métier.

De manière importante, il est à noter que lorsque la concentration en monomères cristaux liquides réticulables excède 40% en masse, il est possible de ne plus utiliser la structure en cuvette. C'est alors la structure du gel qui assure l'étanchéité de l'objet ainsi formé. Afin de garantir une épaisseur constante, des espaceurs peuvent être ajoutés pour figer l'épaisseur de la structure.

Le mélange, le gel et le procédé selon l'invention, tels que décrits, offrent d'autres applications que les composants optiques.

Ainsi, un second mode de réalisation de l'invention concerne les batteries électriques constituées d'une juxtaposition de cuvettes.

Ce mode de réalisation se caractérise par le fait que les molécules dotées de propriétés physico-chimiques sont des électrolytes de type sels de lithium (Li), comme par exemple LiClO₄, LiCl, LiBF₄, ou leur mélange.

Il apparaît clairement que ces molécules doivent être solubles dans le mélange selon l'invention.

De manière avantageuse, la gélification et le caractère adhésif du gel sont obtenus à l'aide de monomères mono et/ou multifonctionnalisés à l'aide de fonctions réticulables de type époxy, avantageusement substituées par au moins un groupe hydrophile.

Des tels monomères sont par exemple choisis dans la liste suivante : 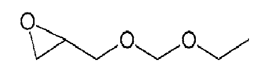 Molécule hydrophile monofonctionnalisée par un groupement epoxy (composé E) 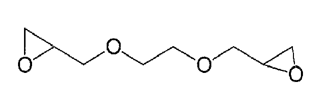 Molécule hydrophile bifonctionnalisée par deux groupements epoxy (composé F) 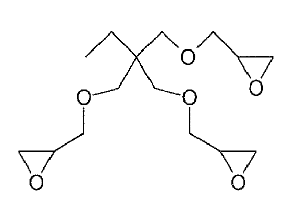 Molécule hydrophile trifonctionnalisée par 3 groupements epoxy (composé G)

Dans un mode de réalisation privilégié, les fonctions réticulables sont au nombre de deux par monomères, qui se trouvent ainsi bifonctionnalisés.

Comme déjà dit, la composition en monomères est supérieure ou égale à 30% de la masse totale du mélange à polymériser. Par ailleurs et lorsque la polymérisation est réalisée par insolation aux UV, un initiateur de polymérisation de type «photo acide generator» est ajouté au mélange selon l'invention.

Un autre aspect de l'invention concerne donc un procédé de fabrication et de scellement de batteries constituées de cellules juxtaposées.

Un tel procédé comprend les étapes essentielles suivantes :
■ remplissage des cuvettes juxtaposées à l'aide d'un mélange tel que précédemment décrit ;
■ polymérisation du mélange, avantageusement par insolation aux UV ;
■ dépose d'un couvercle.

A noter que dans cette application particulière, le procédé doit permettre la mise en place des électrodes.

L'anode peut être disposée soit sur le couvercle de fermeture, soit au fond de la cuvette.
Quant à la cathode, elle est disposée à l'opposé de l'anode.

Les avantages de la présente invention ressortiront mieux des exemples de réalisation décrits ci-dessous, à l'appui des figures annexées. Toutefois, ces exemples n'ont aucune portée limitative.

### LEGENDES DES FIGURES

La figure 1 est une vue schématique en section (A) ou de dessus (B) de cellules constituées de cuvettes juxtaposées fermées à l'aide d'un couvercle.
La figure 2 représente une vue schématique de cuvettes remplies avec un excès de liquide, avant (A) et après (B) fermeture à l'aide d'un couvercle.
La figure 3 schématise le procédé de fabrication et de scellement de cellules à cristaux (A/ avant dépose du couvercle ; B/ après dépose du couvercle).
La figure 4 schématise des batteries fabriquées à l'aide du mélange réactionnel et du procédé selon l'invention.

### 1/ Fabrication de cellules à cristaux :

### Préparation du mélange réactionnel:

On réalise un mélange comprenant en masse :
- 0,5% Irgacure 651 (CIBA) ;
- 68,5% E7 (Merck) cristal liquide ;
- 20% du composé A (tel que décrit ci-dessus) ;
- 10% du composé B (tel que décrit ci-dessus).

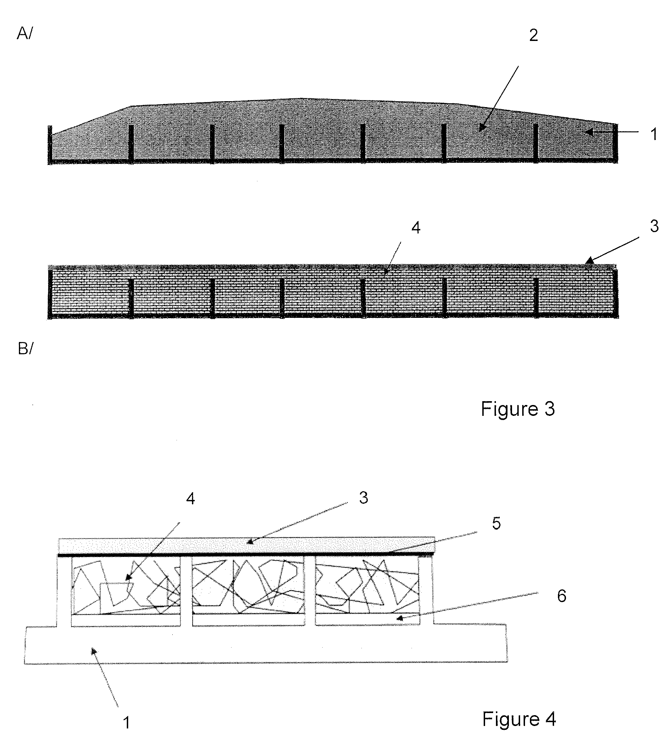

### Remplissage des cuvettes (Figure 3A) :

Pour remplir les cuvettes 1, il suffit de déposer à leur surface, par jet d'encres ou par micropipettes, des gouttes du mélange décrit au-dessus 2.

Le mélange 2 est déposé en excès. Ainsi, du cristal liquide peut déborder en dehors des cuvettes 1 et peut recouvrir le haut des murs.

### Dépose du couvercle (Figure 3B):

Un couvercle 3 est alors laminé sur les cuvettes 1. Dans le cas où une cuvette 1 n'est que partiellement remplie, elle se remplit automatiquement lors de la pose du couvercle 3 par le fait qu'il existe un excès de matériau 2. Au contraire, dans le cas où une cuvette 1 est trop remplie, celle-ci se vide automatiquement dans les cuvettes adjacentes lors de la pose du couvercle 3.

L'ensemble est pressé puis est insolé en lumière UV. La gélification du mélange se produit du fait de la photopolymérisation. Elle transforme le mélange réactionnel en un matériau cristal liquide ayant un fort pouvoir adhésif 4. La figure 3B illustre ce gel anisotrope adhésif, constitué d'un réseau en trois dimensions de polymère gorgé de cristal liquide.

Si, au préalable, les cuvettes 1 ou le couvercle 3 sont revêtus de couches d'alignements et si le matériau 2, avant polymérisation, possède une phase cristal liquide, le matériau obtenu après polymérisation 4 est transparent.

### 2/ Fabrication de batteries :

### Préparation du mélange réactionnel:

On réalise un mélange comprenant en masse:
- 1 % Irgacure 250 (CIBA) ;
- 64% d'un mélange de LiClO₄ et de polyéthylène oxyde;
- 5% du composé G (tel que décrit ci-dessus) ;
- 30% du composé F (tel que décrit ci-dessus).

Les cuvettes **1** sont emplies par le mélange de monomère et d'électrolyte.

### Remplissage des cuvettes et dépose du couvercle (Figure 4) :

Le mélange est insolé sous irradiation UV puis l'insolation UV est coupée.

Le couvercle de scellement **3**, constitué d'une plaque métallique revêtue d'une couche inorganique du type V₂0₅ **5** et servant de cathode, est déposé sur les cuvettes **1**. La cathode en lithium **6** a été disposée avant le remplissage au fond de la cuvette **1**, soit à l'opposé de la cathode **3**.

La polymérisation transforme le liquide en gel **4** et permet le maintien mécanique du couvercle **3** sur les cuvettes **1**.

### REFERENCES

(1) R.A.M. HIKMET and J. LUB: "ANISOTROPIC NETWORKS AND GELS OBTAINED BY PHOTOPOLYMERISATION IN THE LIQUID CRYSTALLINE STATE: SYNTHESIS AND APPLICATIONS" Prog. Polym. Sci., Vol. 21, 1165-1209, 1996.
(2) Yun-Hsing FAN, Hongwen REN, and Shin-Tson WU "NORMAL-MODE ANISOTROPIC LIQUID-CRYSTAL GELS" Applied Physics Letters Vol. 82(18), 2945-47,2003.

## Revendications

1. Mélange destiné à la fabrication d'un gel adhésif comprenant :
■ des molécules de cristaux liquides dotées de propriétés optiques;
■ des monomères de cristal liquide, porteurs de fonctions réticulables, et représentant au moins 30% en masse du mélange, avantageusement au moins 40% en masse.

2. Mélange selon la revendication 1 ***caractérisé* en ce que** la fonction réticulable est une fonction acrylique ou époxy.

3. Mélange selon l'une des revendications 1 et 2, ***caractérisé* en ce que** le mélange comprend en outre un photo-initiateur, avantageusement de l'Irgacure 651 ou de la lucridine TPO lorsque la fonction réticulable est une fonction acrylique, ou un composé de type « photo acide generator » lorsque la fonction réticulable est une fonction époxy.

4. Mélange selon l'une des revendications précédentes, ***caractérisé* en ce que** les fonctions réticulables, portées par les monomères de cristal liquide, sont de type acrylique et sont situées aux extrémités, avantageusement au nombre de deux.

5. Mélange selon la revendication 4, ***caractérisé* en ce que** le mélange comprend en outre un colorant dichroïque ou un composé photochrome.

6. Procédé de fabrication d'un gel adhésif, ***caractérisé* en ce qu'**un mélange selon l'une des revendications 1 à 5 est soumis à une étape de polymérisation, avantageusement par insolation en lumière UV.

7. Gel adhésif obtenu à l'aide du procédé selon la revendication 6.

8. Procédé de fabrication et de scellement de cellules à cristaux constituées de cellules juxtaposées comprenant les étapes suivantes :
■ remplissage, avantageusement en excès, des cuvettes à l'aide d'un mélange selon l'une des revendications 1 à 5 ;
■ dépose d'un couvercle ;
■ pressage ;
■ polymérisation du mélange, avantageusement par insolation aux UV.
